# EUROPÄISCHE PATENTANMELDUNG

(11) **EP 4 068 177 A1**
(43) Veröffentlichungstag der Anmeldung: **05.10.2022**
(21) Anmeldenummer: 21166195.4
(22) Anmeldetag: 31.03.2021
(51) Int. Cl.: G06Q 10/06

(54) **VERFAHREN ZUM VERWALTEN EINES DATENZUGRIFFS**

(71) Anmelder: Siemens Aktiengesellschaft, 80333 München (DE)
(72) Erfinder: Fischer, Jan-Gregor, 85604 Zorneding (DE); Gittsovich, Oleg, 91083 Baiersdorf (DE); Jäger, Tobias, 91083 Baiersdorf Igelsdorf (DE)

(57) **Zusammenfassung**

Die Erfindung betrifft ein Verfahren zum Verwalten eines Datenzugriffs. Um eine Integrität und Qualität von Daten zu verbessern sowie diese vor unberechtigtem Zugriff zu schützen, wird vorgeschlagen, dass erste Daten (12), welche Betriebsmitteln einer Automatisierungsumgebung zugeordnet sind, von einem Datenprovider (4) an einen Datenconsumer (6) in Abhängigkeit zumindest einer ersten Datenschutzlizenz (10) bereitgestellt werden, wobei die erste Datenschutzlizenz (10) einen Integritätsnachweis und zumindest einen Constraint für eine Datennutzung aufweist, wobei die erste Datenschutzlizenz (10) von einem Lizenz-Durchsetzer (18) überprüft und erzwungen wird, wobei die ersten Daten von einem Datenprozessor (20), welcher dem Datenconsumer (6) zugeordnet ist, gemäß der vom Lizenz-Durchsetzer (18) erzwungenen ersten Datenschutzlizenz (10) verarbeitet werden.

## Beschreibung

Die Erfindung betrifft ein Verfahren zum Verwalten eines Datenzugriffs.

Darüber hinaus betrifft die Erfindung ein System zum Verwalten eines Datenzugriffs.

Die vorliegende Erfindung bezieht sich im Allgemeinen auf ein industrielles Internet-of-Things-Ökosystem, kurz IoT-Ökosystem. Ein derartiges IoT-Ökosystem umfasst als Plattform eine IT-Infrastruktur, welche Speicherplatz, Rechenleistung und/oder Anwendungssoftware zur Verfügung stellt, und Assets. Assets sind z.B. IoT-Daten, die Partnern des IoT-Ökosystems zugeordnet sind. Das industrielle IoT verbindet Steuerungen, Maschinen, Komponenten und Arbeitsplätze, beispielsweise in einer Automatisierungsumgebung, miteinander und mit übergeordneten Systemen vor Ort und in einer Cloud. Innerhalb von Anwendungsfällen und Szenarien des IoT sind Authentizität und Qualität der Daten entscheidend. Insbesondere zwischen unterschiedlichen Parteien ergeben sich erhöhte Anforderungen hinsichtlich der Authentizität und Qualität von ausgetauschten Daten sowie einer allgemeinen Kontrolle und Verwaltung dieses Austausches. Derartige Daten können maschinenbezogene Daten, z.B. Prozessdaten, maschinenbezogene Merkmale, z.B. Stücklisten, produkt- bzw. werkstückbezogene Daten und Informationen inkl. Engineering-Inhalte wie Stück- und Verfahrenslisten, werkstattrelevante Informationen und Daten aus der Planung und Ausführung, zusätzliche Daten- und Informationsquellen wie Wartungs- und Qualitätsdaten und Eingaben von Lieferanten und Auftragnehmern sein.

Die Offenlegungsschrift DE 10 2016 219 848 A1 beschreibt eine Vorrichtung zur Integritätsprüfung, die geeignet ist, eine gesicherten Kommunikation zwischen mindestens zwei Kommunikationspartnern innerhalb eines echtzeitfähigen Kommunikationsnetzwerkes, insbesondere im Umfeld einer industriellen Fertigung und/oder Automatisierung, bereitzustellen, aufweisend eine Einheit zum Empfang eines gebildeten ersten Integritätsreferenzwertes zu mindestens einer herausgefilterten Nachricht und/oder zum Empfang zumindest eines gebildeten zweiten Integritätsreferenzwertes zu mindestens einer herausgefilterten Nachricht, eine Einheit zum Korrelieren des ersten Integritätsreferenzwertes mit dem zumindest zweiten Integritätsreferenzwert und zum Vergleichen derselben, eine Einheit zum Ausgeben einer Warn- und/oder Alarmmeldung, die für eine entsprechende Gegenmaßnahme einleitende Stelle vorgesehen ist, wenn die korrelierten Integritätsreferenzwerte voneinander abweichen.

Vor diesem Hintergrund liegt der Erfindung die Aufgabe zugrunde, die Integrität und Qualität von Daten zu verbessern sowie diese vor unberechtigtem Zugriff zu schützen.

Die Aufgabe wird erfindungsgemäß gelöst durch ein Verfahren zum Verwalten eines Datenzugriffs, wobei erste Daten, welche Betriebsmitteln einer Automatisierungsumgebung zugeordnet sind, von einem Datenprovider an einen Datenconsumer in Abhängigkeit zumindest einer ersten Datenschutzlizenz bereitgestellt werden, wobei die erste Datenschutzlizenz einen Integritätsnachweis und zumindest einen Constraint für eine Datennutzung aufweist, wobei die erste Datenschutzlizenz von einem Lizenz-Durchsetzer überprüft und erzwungen wird,
wobei die ersten Daten von einem Datenprozessor, welcher dem Datenconsumer zugeordnet ist, gemäß der vom Lizenz-Durchsetzer erzwungenen ersten Datenschutzlizenz verarbeitet werden.

Darüber hinaus wird die Aufgabe erfindungsgemäß gelöst durch ein System zum Verwalten eines Datenzugriffs aufweisend zumindest eine erste Datenschutzlizenz für erste Daten, wobei die ersten Daten Betriebsmitteln einer Automatisierungsumgebung zugeordnet sind und für eine Bereitstellung von einem Datenprovider an einen Datenconsumer in Abhängigkeit der zumindest einen ersten Datenschutzlizenz konfiguriert sind, wobei die erste Datenschutzlizenz einen Integritätsnachweis und zumindest einen Constraint für eine Datennutzung aufweist, einen Lizenz-Durchsetzer, welcher konfiguriert ist die erste Datenschutzlizenz zu überprüfen und erzwingen und einen Datenprozessor, welcher dem Datenconsumer zugeordnet ist, wobei der Datenprozessor konfiguriert ist die ersten Daten gemäß der vom Lizenz-Durchsetzer erzwungenen ersten Datenschutzlizenz zu verarbeiten.

Die in Bezug auf das Verfahren nachstehend angeführten Vorteile und bevorzugten Ausgestaltungen lassen sich sinngemäß auf das System übertragen und vice versa.

Der Erfindung liegt die Überlegung zugrunde, die Integrität und Qualität von Daten, welche Betriebsmitteln einer Automatisierungsumgebung zugeordnet sind, zu verbessern sowie diese vor unberechtigtem Zugriff zu schützen, insbesondere um ein offenes IoT-Ökosystem zu ermöglichen, in welchem sich die beteiligten Parteien nicht kennen müssen. Dazu werden erste Daten von einem Datenprovider an einen Datenconsumer in Abhängigkeit zumindest einer ersten Datenschutzlizenz bereitgestellt. Die ersten Daten sind somit durch die zumindest eine erste Datenschutzlizenz geschützt. Der Datenprovider ist insbesondere eine Datenquelle, beispielsweise eine Sensorvorrichtung, eine Steuerung oder eine Datenbank. Der Datenconsumer ist beispielsweise eine Datensenke, wie z.B. eine, insbesondere analytische, Anwendung, eine Steuerung, eine Ausgabedatei oder eine Datenbank. Die erste Datenschutzlizenz gibt insbesondere für einen von einem Datenprovider angebotenen Datensatz eine Datenquelle sowie Lesebeschränkungen und/oder Transformationsbeschränkungen an. Sie liegt beispielsweise in Form zumindest eine Beschreibung, insbesondere in Form einer XML-Datei, eines JSON-Snippets oder eines strukturierten Dateneintrags in einer Datenbank.

Die erste Datenschutzlizenz weist einen Integritätsnachweis und zumindest einen Constraint für eine Datennutzung auf, wobei unter einer Datennutzung beispielsweise das Zugreifen auf die ersten Daten, insbesondere durch Lesen und/oder Transformieren, zu verstehen ist. Der Integritätsnachweis, welcher die Datenquelle und die Daten selbst betrifft, ist beispielsweise in Form einer digitalen Signatur ausgeführt. Über den zumindest einen Constraint für die Datennutzung wird eine Berechtigung des Datenzugriffs durch Lesen und Transformieren definiert. Ein Constraint kann beispielsweise definieren wer, wann, wo und/oder wie auf die ersten Daten zugreifen darf. Insbesondere durch eine deklarative Modellierung des zumindest einen Constraints wird eine Einschränkung der Nutzung der ersten Daten durch bekannte oder unbekannte Datenconsumer ermöglicht. Beispielsweise kann der Datenprovider den zumindest einen Constraint definieren. Der zumindest eine Constraint kann das Erlauben oder Einschränken der Datennutzung für eine bestimmte Situation definieren, wobei durch einen derartigen Constraint eine dynamische Anpassung einer Datenqualität ermöglicht wird.

Die erste Datenschutzlizenz wird von einem Lizenz-Durchsetzer überprüft und erzwungen, wobei die ersten Daten von einem Datenprozessor, welcher dem Datenconsumer zugeordnet ist, gemäß der vom Lizenz-Durchsetzer erzwungenen Datenschutzlizenz verarbeitet werden. Durch eine derartige Verbindung von Datenprovider und Datenconsumer in Abhängigkeit der ersten Datenschutzlizenz, ist die Integrität und Qualität der Daten, insbesondere jederzeit, gewährleistet. Daher ist es aus Sicht des Datenprovider möglich, die Verteilung und Nutzung der ersten Daten in einem offenen Ökosystem zu kontrollieren. Ferner sind die ersten Daten so vor einem unberechtigten Zugriff geschützt.

Eine weitere Ausführungsform sieht vor, dass zweite Daten aus den ersten Daten generiert werden, wobei die zweiten Daten mit einer zweiten Datenschutzlizenz versehen werden, die die erste Datenschutzlizenz der ersten Daten enthält. Beispielsweise generiert ein Datenprosumer zweite Daten aus den ersten Daten, wobei ein Datenprosumer eine Vereinigung der Funktionalitäten eines Datenproviders und eines Datenconsumers darstellt und die technische Umsetzung beider in einer kombinierten Funktion zusammengefasst wird. Auf diese Weise werden die Datenschutzlizenzen in datengetriebenen Workflows von Datentransformationsschritten erhalten, sodass Integrität und Transparenz der Daten gewahrt bleibt. Insbesondere werden sichere Datenverarbeitungsketten ermöglicht, in denen sich die beteiligten Parteien nicht kennen müssen.

Eine weitere Ausführungsform sieht vor, dass der zweiten Datenschutzlizenz die erste Datenschutzlizenz in Form eines hierarchischen Datenschutzlizenz-Abhängigkeitsstrukturformats bereitgestellt wird. Ein derartiges hierarchisches Datenschutzlizenz-Abhängigkeitsstrukturformat behält die ursprünglichen Datenschutzlizenzinformationen der vom Datenprozessor als Eingabe für zumindest eine Transformation verwendeten Daten bei.

Eine weitere Ausführungsform sieht vor, dass zumindest eine Datenschutzlizenz bereitgestellt wird, die Informationen über die Herkunft der jeweiligen Daten enthält. Insbesondere enthält eine Datenschutzlizenz Informationen über die Herkunft von Daten, welche aus Datenquellen stammen, für die keine Datenschutzlizenz verfügbar ist, um diese Information oder eine Nichtverfügbarkeit transparent zu machen.

Eine weitere Ausführungsform sieht vor, dass zumindest ein Constraint bereitgestellt wird, welcher eine Richtline für die Datennutzung in zumindest einer vorgegebenen Situation beinhaltet. Eine derartige vorgegebene Situation wird beispielsweise über eine regelbasierte, beschränkungsbasierte, deskriptive, statistische oder durch ein neuronales Netz gestützte Richtlinie definiert. Ein derartiger Constraint kann beispielsweise vom Datenprovider definiert werden. Auf diese Weise wird eine dynamische Anpassung des Datenzugriffs ermöglicht.

Eine weitere Ausführungsform sieht vor, dass zumindest eine Datenschutzlizenz bereitgestellt wird, welche eine digitale Signatur für eine Nichtabstreitbarkeit des Ausschlusses von der Datennutzung enthält, wobei eine Mitteilung an einen Datenconsumer gesendet wird, welche eine Begründung des Ausschlusses von der Datennutzung enthält. Dadurch wird ein zusätzlicher Integritätsschutz erreicht.

Eine weitere Ausführungsform sieht vor, dass die ersten Daten über einen nach einem kryptographischen Verfahren verschlüsselten Datenkanal und/oder über einen sicheren Datenkanal übertragen werden. Ein nach einem kryptographischen Verfahren verschlüsselter Datenkanal ist beispielsweise symmetrisch oder asymmetrisch verschlüsselt. Ein sicherer Datenkanal wird beispielsweise über TLS1.2 verschlüsselt. Durch eine derartige Verschlüsselung wird eine zur sicheren Datenübertragung gewährleistet.

Eine weitere Ausführungsform sieht vor, dass die ersten Daten über einen Quantenkommunikationskanal übertragen werden. Der Quantenkommunikationskanal wird auch Quantenkanal genannt. Hierzu können die ersten Daten vor der Übertragung in einen oder mehrere Quantenzustände kodiert werden. Dadurch kann eine unbedingte Sicherheit der Datenübertragung gewährleistet werden, da die Daten aus einem Quantenzustand nicht auslesbar sind.

Eine weitere Ausführungsform sieht vor, dass der Datenprovider Quantendaten bereitstellt und der Datenconsumer eine Quantenberechnung, insbesondere unter Verwendung eines oder mehrere Quantengatter, mit den empfangenen Quantendaten durchführt. Unter Quantendaten sind in einem Quantenzustand kodierte Daten zu verstehen. Insbesondere weist der Datenconsumer einen Quantencomputer auf, welcher dazu konfiguriert ist, eine Quantenberechnung mit vom Datenprovider bereitgestellten Quantendaten, z.B. gemäß der ersten Datenschutzlizenz, durchzuführen, indem er die Daten aus einer oder mehreren Quellen in einen oder mehrere Quantenzustände kodiert, was die Sicherheit erhöht. Es ist z.B. denkbar, dass die erste Datenschutzlizenz einen oder mehrere Quantenalgorithmen - d.h. eine Abfolge von Quantengattern - beschreibt, die von dem Datenconsumer durchgeführt werden dürfen.

Eine weitere Ausführungsform sieht vor, dass zumindest eine Datenschutzlizenz bereitgestellt wird, die eine Regel zur Kodierung und Übertragung der jeweiligen Daten in einen Quantenzustand enthält. Auf diese Weise wird die jeweilige Datenschutzlizenz zu einem nicht-disjunkten Teil der Daten selbst.

Im Folgenden wird die Erfindung anhand der in den Figuren dargestellten Ausführungsbeispiele näher beschrieben und erläutert.
- FIG 1: eine schematische Darstellung eines offenen IoT-Ökosystems,
- FIG 2: zeigt eine schematische Darstellung einer ersten Ausführung eines Systems zum Verwalten eines Datenzugriffs und
- FIG 3: zeigt eine schematische Darstellung einer zweiten Ausführung eines Systems zum Verwalten eines Datenzugriffs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

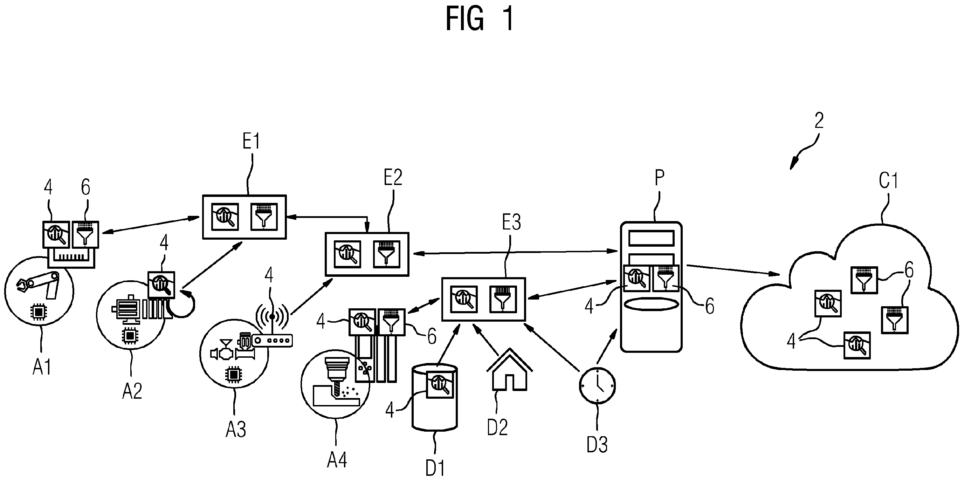

FIG 1 zeigt eine schematische Darstellung eines offenen IoT-Ökosystems 2 mit beispielhaft vier Assets A1, A2, A3, A4, die als Datenquellen und/oder Datensenken fungieren. Das erste Asset A1 ist beispielsweise ein Industrieroboter, der von einer Robotersteuerungsvorrichtung gesteuert wird, welche einen Datenprovider 4 und einen Datenconsumer 6 des Systems 8 umfasst. Der Datenprovider 4 ist eine Datenquelle, wie z.B. eine Sensorvorrichtung, eine Steuerung oder eine Datenbank, welche Roboterdaten, insbesondere Bewegungsdatenströme eines Roboterarms, bereitstellen kann. Der Datenconsumer 6 ist eine Datensenke, wie z.B. eine, insbesondere analytische, Anwendung, eine Steuerung, eine Ausgabedatei oder eine Datenbank, welche Daten, insbesondere Robotersteuerungsdaten, vom Datenconsumer 6 erhält. Das zweite Asset A2 ist beispielsweise ein Industriemotor für ein Förderband, der Teile zum Roboter bewegt und Motordaten, z. B. Geschwindigkeit, Frequenz, Beschleunigungswerte, über einen Datenprovider 4 bereitstellt. Das dritte Asset A3 ist beispielsweise eine Kühlmittel-Durchflusspumpe, die über einen Datenprovider 4, der über Industrie-WLAN verbunden ist, Steuerzustandswerte, z.B. Durchflussmenge, Kühlmittel-Fließdruck, Alarme, liefert. Das vierte Asset A4 ist beispielsweise eine Werkzeugmaschine mit einem Motion-Automation-Controller, der zur Ausführung industrieller Anwendungen konfiguriert ist. Die Werkzeugmaschine stellt, insbesondere hochfrequente, Werkzeugmaschinendaten und lokal vorverarbeitete Daten mit einem Datenprovider 4 bereit. Ferner werden Konfigurationsdaten der industriellen Anwendung, wie z.B. ein analytisches Modell, das für die lokale Vorverarbeitung der Werkzeugmaschinendaten verwendbar ist, mit einem Datenconsumer 6 empfangen.

Ferner sind in FIG 1 beispielhaft drei weitere Datenquellen D1, D2, D3 dargestellt. Die erste Datenquelle D1 ist beispielsweise eine Datenbank, die mit einem Fabriknetzwerk verbunden ist und Daten wie Enterprise Resource Planning-Daten, Daten des Manufacturing Executing Systems, Daten des Computerized Maintenance Management Systems oder Daten des Supply Chain Management über einen Datenprovider 4 zur Verfügung stellt. Die zweite Datenquelle D2 ist exemplarisch als ein Geoinformationssystem, insbesondere ein industrieller WLANbasierter Positionstracker, zur Bereitstellung von Standortverfolgungsinformationen eines mobilen Geräts, z.B. eines Tablet-PCs eines Werkzeugmaschinenbedieners, ausgeführt. Die dritte Datenquelle D3 ist beispielhaft als eine Datums- und Zeitdatenquelle ausgeführt, die weiteren Teilnehmern lokale oder globale Uhrzeitinformationen zur Verfügung stellt. Beispielsweise ist die dritte Datenquelle D3 als ein Network Time Protocol-Server ausgeführt.

Das IoT-Ökosystem 2 in FIG 1 umfasst darüber hinaus beispielhaft drei Edge-Geräte E1, E2, E3, welche auch IoT-Geräte genannt werden. Die Edge-Geräte E1, E2, E3 umfassen jeweils einen Datenprovider 4 und einen Datenconsumer 6. Ein erstes Edge-Gerät E1 weist zumindest eine Anwendung auf, die Roboterdaten des ersten Assets A1 und Motordaten des zweiten Assets A2 empfängt und weiterverarbeitet. Ferner kann das erste Edge-Gerät E1 beispielsweise eine Steuerungsoptimierungsroutine an das erste Asset A1 zurückmelden, um z.B. eine Taktung zwischen dem Förderband und dem Roboter zu verbessern. Darüber hinaus ist das erste Edge-Gerät E1 dazu konfiguriert bidirektional mit einem zweiten Edge-Gerät E2 zu kommunizieren. Ein zweites Edge-Gerät E2 weist zumindest eine Anwendung auf, die Kühlmittelflussdaten des dritten Assets A3 empfängt und weiterverarbeitet. Ferner steht das zweites Edge-Gerät E2 mit einem lokalen Server P1, welcher als OnPrem-Server ausgeführt ist und eine Datenprovider 4 sowie einen Datenconsumer 6 aufweist, in Verbindung, auf welchem beispielsweise Anwendungen zur Nachbearbeitung laufen. Ein drittes Edge-Gerät E3 weist zumindest eine Anwendung auf, die, insbesondere hochfrequente, Werkzeugmaschinendaten des vierten Assets A4 empfängt und in Kombination mit geplanten Wartungsaufgaben der ersten Datenquelle, Standortdaten der zweiten Datenquelle D2 und einer Zeitinformation der dritten Datenquelle D3 weiterverarbeitet. Das vierte Edge-Gerät kann in diesem Anwendungsszenario Daten wie numerische Steuerungsprogramm-Eingangsvariablen zur Anpassung der Vorschubgeschwindigkeit beim Fräsen von Werkstücken an das vierte Asset A4 zurückmelden und auch abgeleitete Daten zum Beispiel an den lokalen Server P1 liefern.

Das IoT-Ökosystem 2 in FIG 1 umfasst überdies eine cloudbasierte Infrastruktur C1. Die cloudbasierte Infrastruktur C1 stellt Speicherplatz, Rechenleistung und/oder Anwendungssoftware über das Internet zur Verfügung. Eine derartige Cloud-Umgebung ist beispielsweise die "MindSphere". In der cloudbasierten Infrastruktur C1 sind globale Anwendungen mit Daten vom lokalen Server P1 betreibbar. Beispielsweise sind mehrere Komponenten, wie Assets A1, A2, A3, A4, Datenquellen D1, D2, D3, Edge-Geräte E1, E2, E3 und lokale Server P1, insbesondere aus mehreren verschiedenen Systemen derselben oder mehrerer unterschiedlicher juristischer Personen mit der cloudbasierte Infrastruktur C1 verbunden, um fortschrittliche Anwendungsszenarien mit mehreren Partnern wie OEMs und Drittanbietern von Anwendungen in zumindest einem offenen IoT-Ökosystem 2 zu ermöglichen. In einem weiteren Anwendungsbeispiel sind Anwendungen der cloudbasierte Infrastruktur C1 dazu konfiguriert, Daten an zumindest einen lokalen Server P1, ein Edge-Gerät E1, E2, E3 und oder ein Asset A1, A2, A3, A4 zu liefern, um z.B. Automatisierungssteuerungsdaten, Hintergrundinformationen für analytische Berechnungen oder in der Cloud trainierte Analysemodelle für derartige Teilnehmer bereitzustellen.

Das IoT-Ökosystem 2, das Datenprovider 4 und Datenconsumer 6 miteinander verbindet, kann durch die Anwendung zusätzlicher Verfahren wie Constraint Reasoning, mathematische Optimierung, z.B. heuristische, statistische, KI-basierte Ansätze, unterstützt werden. Insbesondere erfolgt dieses Matchmaking durch eine fortschrittliche Reasoning-Komponente, wie z.B. regelbasiertes Reasoning, Constraint Reasoning, Description Logics Reasoning, mathematische Optimierung und andere technische Matchmaking-Mittel zur Abbildung der deklarativ modellierten Daten- und Datenqualitätsfähigkeiten der Datenprovider 4 auf die Daten- und Datenqualitätsanforderungen der Datenconsumer 6. Dieser Prozess kann entweder zentralisiert, systemzentrales Matchmaking genannt, oder dezentralisiert, komponentenlokales Matchmaking genannt, durchgeführt werden.

Mit dem Anwendungsbeispiel ist es möglich Daten an nicht notwendigerweise a-priori bekannte Datenconsumer 6 auf der Grundlage einer Datenschutzlizenz, die die Integrität der Datenquelle und der Daten selbst garantiert und es erlaubt, Einschränkungen für den Datenkonsum zu definieren, die von den Datenconsumer 6 eingehalten werden müssen, bereitzustellen.

Ferner wird ein Aufbau hochflexibler Datenverarbeitungsketten mit Laufzeit-Datenbindungen ermöglicht, die sich dynamisch an lizenzbezogene Lese-/Transformationsbeschränkungen halten, die von verschiedenen Eigenschaften wie datenkonsumierenden Akteuren, Zeit, Raum und Datenqualitäten, die den Datenkonsum durch definieren und/oder einschränken, abhängen und darauf Datenconsumer 6 reagieren können. So wird beispielsweise eine Edge-Anwendung auf dem ersten Edge-Gerät E1 ermöglicht, die hochwertige Daten vom ersten Asset A1 und vom zweiten Asset A2 korreliert, um optimierte Robotersteuerungsroutinen abzuleiten, die den Datenconsumer 6 angeboten werden. Ein solcher Datenconsumer 6 könnte das erste Asset A1 sein, das eine qualitativ hochwertige Darstellung der Routinen für die Selbstoptimierung des Pick-and-Place für bestimmte Zeitfenster benötigt, oder eine Edge-Anwendung auf dem zweiten Edge-Gerät E2, die nur eine qualitativ weniger hochwertige Darstellung der gleichen Routinen für die Korrelation mit sich langsam ändernden Kühlmittelflussdaten benötigt. Dies wäre insbesondere ein gültiges Szenario, wenn das erste Asset A1 und das zweite Asset A2 von derselben Produktionsanlage abhängig sind, z.B. einer additiven Fertigungszelle, die Werkstücke produziert, die über das Förderband zum Roboter zur Entnahme und Übergabe an eine andere Maschine transportiert werden, und ihr eigenes Produktionsverhalten an das Verhalten dieser Anlage anpassen möchten.

Darüber hinaus wird eine Steuerung des Datenverbrauchs gemäß abonnierter, insbesondere lizenzierter, Lese-Constraints und/oder Transformations-Constraints, wie z.B. Constraints zum Erlauben oder Einschränken der Datennutzung, für bestimmte Situationen, ermöglicht. So ermöglicht beispielsweise ein als erlaubt gelisteter Constraint die dynamische Anhebung der Datenqualität von einem standardmäßigen niederfrequenten Datenverbrauch der vom Asset A4 in Standardszenarien bereitgestellten Daten auf einen temporären hochfrequenten Datenverbrauch für ein bestimmtes Szenario wie ein beginnendes Spindelabsturzszenario. In diesem Fall die Ermöglichung einer temporären hochwertigen Online-Werkzeugweganalyse durch eine auf dem zweiten Edge-Gerät E2 laufende Anwendung zur Erkennung von Spindelabstürzen, um einen beginnenden Spindelabsturz der Maschine zu erkennen und zu vermeiden. Die Anwendung auf dem zweiten Edge-Gerät E2 darf also in keiner anderen Situation als einem erkannten, insbesondere beginnenden, Spindelabsturzszenario hochfrequente Daten verbrauchen.

Ferner wird ermöglicht, dass derartige Änderungen der Berechtigungen für Datenprovider 4, Datenconsumer 6 und den Eigentümer des Ökosystems über die jeweiligen Anwendungsprogrammierschnittstelle, kurz APIs, transparent zu machen. Dies kann unter Verwendung eines Publish/Subscribe- oder ereignisbasierten Modells, das den Datenverbraucher über die Laufzeitänderungen der Datenbereitstellung und, insbesondere optional, den Grund für derartige Änderungen informiert. Durch diese Eigenschaften werden neue situationsbezogene Geschäftsmodelle für datengetriebene Anwendungen im offenen IoT-Ökosystem 2 ermöglicht.

Ferner ist eine Integrität jedes Datenproviders 4 von ursprünglichen und transformierten Daten über einen Datenverarbeitungs-Workflow hinweg überprüfbar. Dies schafft Vertrauen für datengetriebene Geschäftsfälle in offenen IoT-Ökosystemen 2 und ermöglicht den Aufbau von Marktplätzen für Daten auf Basis historischer, aktueller und prognostizierter, insbesondere simulationsbasierter, Daten, beispielsweise unter Verwendung von Batch-, ereignis- oder streaming-basierter Datentransfers.

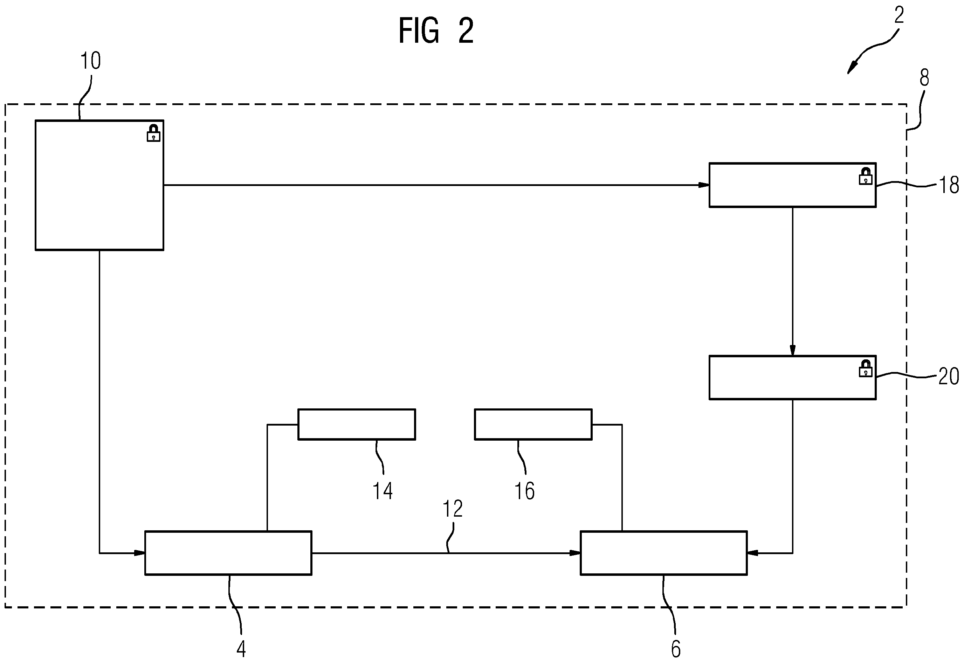

FIG 2 zeigt eine schematische Darstellung einer ersten Ausführung eines Systems 8 zum Verwalten eines Datenzugriffs, welches einem offenen IoT-Ökosystem 2, welches beispielsweise wie in FIG 1 dargestellt ausgeführt ist, zugeordnet ist. Das System 8 umfasst einen Datenprovider 4. Beispielsweise kann der Datenprovider 4 in einem Quantenzustand kodierte Daten, welche Quantendaten genannt werden, bereitstellen, indem er Daten aus einer oder mehreren der oben genannten Quellen in einen oder mehrere Quantenzustände kodiert. Der Datenprovider 4 stellt erste Daten 12, insbesondere Quantendaten, für zumindest einen Datenconsumer 6 zur Verfügung, wobei die Daten durch zumindest eine erste Datenschutzlizenz 10 geschützt sind. Die erste Datenschutzlizenz 10 ist beispielsweise zumindest eine Beschreibung, insbesondere in Form einer XML-Datei, eines JSON-Snippets oder eines strukturierten Dateneintrags in einer Datenbank, welche für einen von einem Datenprovider 4 angebotenen Datensatz eine Datenquelle sowie Lesebeschränkungen und/oder Transformationsbeschränkungen angibt. Die zumindest eine Beschreibung kann in Form eines Quantenzustands oder einer Superposition von Quantenzuständen zur Verfügung gestellt werden. Alternativ liegt eine Transformationsbeschränkung in der ersten Datenschutzlizenz 10 in Form von zur Durchführung freigegebener Quantenoperationen und/oder Quantenalgorithmen vor. Der Datenconsumer 6 kann mittels eines Quantencomputers eine Datenverarbeitung gemäß der ersten Datenschutzlizenz 10 durchführen. Beispielsweise können die Spezifikation der Daten sowie die Lesebeschränkungen und/oder die Transformationsbeschränkungen in einer einzigen Superposition kodiert werden. Es ist nicht erforderlich, dass eine genaue Kodierung öffentlich bekannt ist, so dass nur der Datenconsumer 6 sehen kann, was die erste Datenschutzlizenz 10 ist. In einer Quantenwelt ist die erste Datenschutzlizenz 10 beispielsweise als ein Satz von Regeln zur Kodierung und Übertragung der Daten in einen Quantenzustand ausgeführt. Auf diese Weise wird die erste Datenschutzlizenz 10 zu einem nicht-disjunkten Teil der Daten selbst. Insbesondere umfasst der Datenconsumer 6 einen Quantencomputer, welcher konfiguriert ist, Quanteninformationen zu empfangen und zu verarbeiten, die die zumindest eine erste Datenschutzlizenz 10 umfassen.

Die erste Datenschutzlizenz 10 enthält einen Integritätsnachweis der Datenquelle und der Daten selbst, wobei der Integritätsnachweis beispielsweise in Form einer digitalen Signatur ausgeführt ist. Die erste Datenschutzlizenz 10, welche eine integrierte Informationsstruktur darstellt, kann zusätzlich als Ganzes oder in Teilen aus Integritätsgründen, beispielweise in Form einer kryptografischen digitalen Signatur, geschützt werden. Insbesondere kann die erste Datenschutzlizenz 10 quantenauthentifiziert werden. Das Quantenauthentifizierungsprotokoll bietet sowohl eine Authentifizierung als auch eine Verschlüsselung und sorgt so für einen unüberprüfbaren Schutz. Insbesondere ist die erste Datenschutzlizenz 10 vor, während oder nach der Bereitstellung der ersten Daten 12 auf Integrität der Datenquelle und der angebotenen Daten sowie auf etwaige Änderungen überprüfbar, sodass ein Betreiber des IoT-Ökosystems 2 und/oder ein Datenprovider 4 nachweisen können, wann, wo und von wem Daten erstellt, verändert und gelöscht wurden. Durch diese Funktionalität wird eine Nichtabstreitbarkeit, insbesondere der Datennutzung, gewährleistet und Transparenz und Vertrauen in die Datenbereitstellung des IoT-Ökosystems 2 hergestellt.

Neben dem Integritätsnachweis weist die erste Datenschutzlizenz 10 zumindest einen Constraint für eine Datennutzung auf, durch welchen eine Berechtigung des Datenzugriffs durch Lesen und Transformieren definiert wird. Ein Constraint kann beispielsweise definieren, wer einen Datenzugriff zum Lesen und/oder Transformieren erhält. Der Zugriff wird durch eine, insbesondere kryptografisch verschlüsselten, Legal Entity ID oder einer eindeutigen Ressourcenkennung des Datenconsumers 6, eines öffentlichen Schlüssels oder einer Wildcard, die eine Vielzahl von Entitäten adressiert, geregelt. Alternativ wird der Zugriff durch ein Quantengeheimnisaustauschprotokoll oder Quantenauthentifizierungsprotokoll geregelt. Ferner kann ein Constraint definieren, wann ein Datenzugriff zum Lesen und/oder Transformieren erfolgen darf, was z.B. als zeitliche Einschränkung, insbesondere in Form eines EPOCH- oder ISO8601-Zeitstempels oder eines Datums-/Zeitdauerformats, angegeben wird. Ein Zugriffsrecht zum Lesen und/oder Transformieren kann insbesondere in Form einer zeitlich begrenzten Situation spezifiziert werden. Beispielsweise erfolgt eine Spezifikation einer Situation, in der eine für den Datenconsumer 6 verantwortliche juristische Person vor einem kritischen Maschinenwartungsfall steht und die bereitgestellten Daten für eine Root-Cause-Analytics benötigt werden. Eine weitere beispielhafte Situation ist, dass der Datenconsumer 6 als IT-Security Ecosystem Partner zertifiziert ist und Daten benötigt, um ein IT-Security Audit nach einem definierten Need-to-know-Prinzip durchzuführen. Überdies kann ein Constraint definieren, wo ein Datenzugriff zum Lesen und/oder Transformieren erfolgen darf. Diese Angabe kann eine geografische Lage oder eine räumliche Region von Standorten des physischen Einsatzes eines Datenconsumers 6, insbesondere in der ISO TC 211-Norm, und/oder eine logische räumliche Ortsangabe (z.B. "auf einer bestimmten Werkzeugmaschine", "auf einem definierten IoT- oder Edge-Computing-Gerät", "auf dem Gelände einer bestimmten Kundenanlage", "in einem bestimmten Fabriknetzwerk", "in der Cloud") sein. Darüber hinaus kann ein Constraint definieren, wie ein Datenzugriff zum Lesen und/oder Transformieren erfolgen darf. Die Spezifikation kann eine Erlaubnisliste und/oder eine Ablehnungsliste von Berechnungsprinzipien, insbesondere Single-Node-Computing, Cluster-Computing sein. Zusätzlich oder alternativ kann die Spezifikation Zugriffsparadigmen und/oder Transformationsparadigmen, wie "manuell", "halbautomatisch" oder "automatisiert" aufweisen. Des Weiteren kann ein Constraint eine Spezifikation von Qualitätseinschränkungen der Daten, beispielsweise Bilder pro Sekunde in Videoströmen, Auflösung von Kamerabildern, Erfassungsfrequenz von Sensordaten, Auflösung von Maschinendaten, Anzahl von Motordatenvariablen, enthalten. Eine derartige Spezifikation kann optional als eine Vielzahl von Qualitätseinschränkungen in einzelnen Partitionen der Struktur der ersten Datenschutzlizenz 10 für die jeweilige Datenentität definiert werden.

Darüber hinaus kann die erste Datenschutzlizenz 10 Informationen über die Herkunft der ersten Daten enthalten. Insbesondere enthält die erste Datenschutzlizenz 10 Informationen über die Herkunft der ersten Daten, welche aus solchen Datenquellen stammen, für die keine Datenschutzlizenz verfügbar ist, um diese Information (oder Nichtverfügbarkeit) für den Eigentümer des IoT-Ökosystems 2 und/oder den Datenproviders 4 sowie den Datenconsumer 6 transparent zu machen. Die erste Datenschutzlizenz enthält zusätzlich rekursiv die zumindest eine Datenschutzlizenz eines Satzes von ursprünglichen Eingabedaten, falls diese Eingabedaten transformiert wurden, um die durch die erste Datenschutzlizenz 10 beschriebenen Daten zu erzeugen.

Die ersten Daten 12 werden über einen sicheren Kommunikationskanal, beispielsweise TLS1.2, übertragen. Zusätzlich oder alternativ werden die ersten Daten 12 in Form eines symmetrisch oder asymmetrisch verschlüsselten Datenkanals oder in Form von symmetrisch oder asymmetrisch verschlüsselten Daten übertragen. In einer der Ausführungsformen können Quantendaten über einen Quantenkommunikationskanal übertragen werden, um eine unbedingte Sicherheit der Datenübertragung zu gewährleisten.

In einer Datenprovider-Ansicht 12 kann der Datenprovider 4 Daten einsehen und überwachen, was mit den Daten geschah. Eine API dient für einen oder mehrere technische und/oder menschliche Benutzer des jeweiligen Datenproviders 4 zum Einsehen der Daten. Durch die API wird das Durchsuchen Datenprovidern 4, insbesondere durch Filtern nach Kriterien der zumindest einen zugehörigen Datenschutzlizenz 10, ermöglicht. Ferner wird das Anzeigen, Erstellen, Aktualisieren und Löschen zumindest eines Datenproviders 4 und einer oder mehrerer zugehöriger Datenschutzlizenzen 10, die direkt mit den von dem zumindest einen Datenprovider 4 angebotenen Daten während der Engineering-Zeit verbunden sind, ermöglicht.

Darüber hinaus erlaubt es die Datenprovider-Ansicht 12, die Nutzung der bereitgestellten Daten für jeden Datenprovider 4 für jeden abonnierten Datenconsumer 6 in einzelnen und/oder aggregierten Ansichten zur Laufzeit zu visualisieren, zu verfolgen und zu verifizieren. Dies schließt aktuelle und historische Abonnements, Datenabonnement-Metainformationen, und/oder Transfer-Metainformationen, wie Eigenschaften vergangener und laufender Datentransfers und die Datenqualitäten von Abonnements durch Data-Consumer-Komponenten mit ein.

In einer Datenconsumer-Ansicht 14 kann der Datenconsumer 6 Daten einsehen und überwachen, was mit den Daten geschah. Eine API dient für einen oder mehrere technische und/oder menschliche Benutzer des jeweiligen Datenconsumers 6 zum Einsehen der Daten. Durch die API wird das Durchsuchen Datenprovidern 4 und Datenconsumern 6, insbesondere durch Filtern nach Kriterien der zumindest einen zugehörigen Datenschutzlizenz 10, ermöglicht. Ferner werden das Anzeigen, Erstellen, Aktualisieren und Löschen zumindest eines Datenproviders 4 und einer oder mehrerer zugehöriger Datenschutzlizenzen 10, die direkt mit den von dem zumindest einen Datenprovider 4 angebotenen Daten während der Engineering-Zeit verbunden sind, sowie ein Matchmaking ermöglicht, wobei ein Matchmaking ein Prozess der Zuordnung von Datenanforderungen eines Datenconsumers 6 zu den Fähigkeiten zumindest eines Datenproviders 4.

Ein Lizenz-Durchsetzer 18 ist konfiguriert, die erste Datenschutzlizenz 10 zu überprüfen und erzwingen. Im Falle einer Quanteninformationsverarbeitung kann die Rolle des Lizenz-Durchsetzers 18 in vielen Fällen durch die Grundgesetze der Quantenmechanik umgesetzt werden. Eine dritte Kontrollinstanz ist auch bei Quanteninformationsübertragungsprotokollen bzw. Quantendatenverteilungsprotokollen denkbar. Abhängig vom Szenario kann bzw. muss es den Lizenz-Durchsetzer 18 auch in der Quantenwelt geben. Ferner ist dem Datenconsumer 6 ein Datenprozessor 20 zugeordnet. Insbesondere ist der Datenprozessor 20 logisch oder physisch mit dem Datenconsumer 6 integriert. Der Datenprozessor 20 verarbeitet die ersten Daten 12, beispielsweise durch Auswahl, Filterung, Visualisierung, Datenanalyse, Aggregation, Korrelation und einen oder mehrere rechnerische Transformationsschritte gemäß der Constraints zum Lesen und Transformieren der ersten Datenschutzlizenz 10, welche vom Lizenz-Durchsetzer 18 erzwungen werden. Der Datenprozessor 20 kann einen Quantencomputer umfassen, der so konfiguriert ist, dass er eine Quantenberechnung mit den vom Datenconsumer 6 empfangenen Quantendaten durchführt, wobei insbesondere die Quantenberechnung gemäß einer durch die erste Datenschutzlizenz 10 eingeschränkten Quantenschaltung durchgeführt wird.

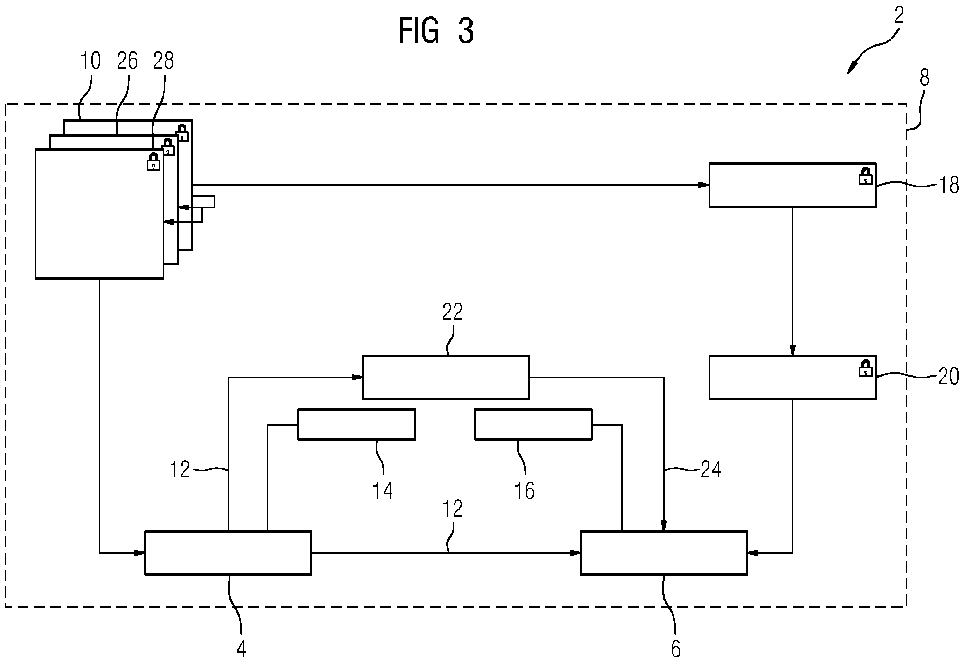

FIG 3 zeigt eine schematische Darstellung einer zweiten Ausführung eines Systems 8 zum Verwalten eines Datenzugriffs, welches einem offenen IoT-Ökosystem 2, welches beispielsweise wie in FIG 1 dargestellt ausgeführt ist, zugeordnet ist. Das System 8 umfasst zusätzlich einen Datenprosumer 22, der eine Vereinigung der Funktionalitäten eines Datenproviders 4 und eines Datenconsumers 6 darstellt, wobei die technische Umsetzung beider in einer kombinierten Funktion zusammengefasst wird.

Beispielhaft werden durch den Datenprosumer 22 zweite Daten 24 aus den ersten Daten 12 generiert, wobei die zweiten Daten 24 mit einer zweiten Datenschutzlizenz 26 versehen werden, die die erste Datenschutzlizenz 10 der ersten Daten 12 enthält. Bei der Generierung der zweiten Daten 24, insbesondere durch eine Transformation, aus ersten Daten 12, die von mindestens einem Datenprovider 4 stammen, wird die erste Datenschutzlizenz 10, die sich auf die ersten Daten 12 bezieht, beibehalten. Bei einer weiteren Generierung von Daten, insbesondere durch eine Transformation, aus ersten Daten 12 und/oder zweiten Daten 24, die mit einer dritten Datenschutzlizenz 26 versehen werden, werden die erste Datenschutzlizenz 10 und/oder die zweite Datenschutzlizenz 26, die sich auf die ersten Daten 12 und/oder die zweiten Daten 24 beziehen, beibehalten. Insbesondere wenn der Datenconsumer 6 ein Datenprosumer 22 ist, können die zweiten Daten 24 nur mit einer zweiten Datenschutzlizenz 26 versehen werden, die die Datenschutzlizenz aller Eingabedaten enthält. Beispielsweise enthält die zweite Datenschutzlizenz 26 die erste Datenschutzlizenz 10 in Form eines hierarchischen Datenschutzlizenz-Abhängigkeitsstrukturformats. Das hierarchische Datenschutzlizenz-Abhängigkeitsstrukturformat behält die ursprünglichen Datenschutzlizenzinformationen der vom Datenprozessor 20 als Eingabe für zumindest eine Transformation verwendeten Daten bei. Die weitere Ausführung des Systems 8 in FIG 3 entspricht der in FIG 2.

Zusammenfassend betrifft die Erfindung ein Verfahren zum Verwalten eines Datenzugriffs. Um eine Integrität und Qualität von Daten zu verbessern, wird vorgeschlagen, dass erste Daten 12, welche Betriebsmitteln einer Automatisierungsumgebung zugeordnet sind, von einem Datenprovider 4 an einen Datenconsumer 6 in Abhängigkeit zumindest einer ersten Datenschutzlizenz 10 bereitgestellt werden, wobei die erste Datenschutzlizenz 10 einen Integritätsnachweis und zumindest einen Constraint für eine Datennutzung aufweist, wobei die erste Datenschutzlizenz 10 von einem Lizenz-Durchsetzer 18 überprüft und erzwungen wird, wobei die ersten Daten von einem Datenprozessor 20, welcher dem Datenconsumer 6 zugeordnet ist, gemäß der vom Lizenz-Durchsetzer 18 erzwungenen ersten Datenschutzlizenz 10 verarbeitet werden.

## Patentansprüche

1. Verfahren zum Verwalten eines Datenzugriffs,
wobei erste Daten (12), welche Betriebsmitteln einer Automatisierungsumgebung zugeordnet sind, von einem Datenprovider (4) an einen Datenconsumer (6) in Abhängigkeit zumindest einer ersten Datenschutzlizenz (10) bereitgestellt werden, wobei die erste Datenschutzlizenz (10) einen Integritätsnachweis und zumindest einen Constraint für eine Datennutzung aufweist,
wobei die erste Datenschutzlizenz (10) von einem Lizenz-Durchsetzer (18) überprüft und erzwungen wird,
wobei die ersten Daten von einem Datenprozessor (20), welcher dem Datenconsumer (6) zugeordnet ist, gemäß der vom Lizenz-Durchsetzer (18) erzwungenen ersten Datenschutzlizenz (10) verarbeitet werden.

2. Verfahren nach Anspruch 1,
wobei zweite Daten (24) aus den ersten Daten (12) generiert werden,
wobei die zweiten Daten (24) mit einer zweiten Datenschutzlizenz (26) versehen werden, die die erste Datenschutzlizenz (10) der ersten Daten (12) enthält.

3. Verfahren nach Anspruch 2,
wobei der zweiten Datenschutzlizenz (26) die erste Datenschutzlizenz (10) in Form eines hierarchischen Datenschutzlizenz-Abhängigkeitsstrukturformats bereitgestellt wird.

4. Verfahren nach einem der vorherigen Ansprüche,
wobei zumindest eine Datenschutzlizenz (10, 26) bereitgestellt wird, die Informationen über die Herkunft der jeweiligen Daten (12, 24) enthält.

5. Verfahren nach einem der vorherigen Ansprüche,
wobei zumindest ein Constraint bereitgestellt wird,
welcher eine Richtline für die Datennutzung in zumindest einer vorgegebenen Situation beinhaltet.

6. Verfahren nach einem der vorherigen Ansprüche,
wobei zumindest eine Datenschutzlizenz (10, 26) bereitgestellt wird,
welche eine digitale Signatur für eine Nichtabstreitbarkeit des Ausschlusses von der Datennutzung enthält,
wobei eine Mitteilung an einen Datenconsumer (6) gesendet wird, welche eine Begründung des Ausschlusses von der Datennutzung enthält.

7. Verfahren nach einem der vorherigen Ansprüche,
wobei die ersten Daten (12) über einen nach einem kryptographischen Verfahren verschlüsselten Datenkanal und/oder über einen sicheren Datenkanal übertragen werden.

8. Verfahren nach einem der vorherigen Ansprüche,
wobei die ersten Daten (12) über einen Quantenkommunikationskanal übertragen werden.

9. Verfahren nach einem der vorherigen Ansprüche,
wobei der Datenprovider (4) Quantendaten bereitstellt und der Datenconsumer (6) eine Quantenberechnung, insbesondere unter Verwendung eines oder mehrere Quantengatter, mit den empfangenen Quantendaten durchführt.

10. Verfahren nach Anspruch 9,
wobei zumindest eine Datenschutzlizenz (10, 26) bereitgestellt wird, die eine Regel zur Kodierung und Übertragung der jeweiligen Daten (12, 24) in einen Quantenzustand enthält.

11. System (8) zum Verwalten eines Datenzugriffs aufweisend
- zumindest eine erste Datenschutzlizenz (10) für erste Daten,
wobei die ersten Daten (12) Betriebsmitteln einer Automatisierungsumgebung zugeordnet sind und für eine Bereitstellung von einem Datenprovider (4) an einen Datenconsumer (6) in Abhängigkeit der zumindest einen ersten Datenschutzlizenz (10) konfiguriert sind,
wobei die erste Datenschutzlizenz (10) einen Integritätsnachweis und zumindest einen Constraint für eine Datennutzung aufweist,
- einen Lizenz-Durchsetzer (18), welcher konfiguriert ist die erste Datenschutzlizenz (10) zu überprüfen und erzwingen und
- einen Datenprozessor (20), welcher dem Datenconsumer (6) zugeordnet ist,
wobei der Datenprozessor (20) konfiguriert ist die ersten Daten (12) gemäß der vom Lizenz-Durchsetzer (18) erzwungenen ersten Datenschutzlizenz (10) zu verarbeiten.

12. System (8) nach Anspruch 11,
umfassend einen Datenprosumer (22) zur Generierung zweiter Daten (24) aus den ersten Daten (12),
wobei die zweiten Daten (24) mit einer zweiten Datenschutzlizenz (26) versehen sind, die die erste Datenschutzlizenz (10) der ersten Daten (12) enthält.

13. System (8) nach Anspruch 12,
wobei die zweite Datenschutzlizenz (26) die erste Datenschutzlizenz (10) in Form eines hierarchischen Datenschutzlizenz-Abhängigkeitsstrukturformats enthält.

14. System (8) nach einem der Ansprüche 11 bis 13,
wobei zumindest eine Datenschutzlizenz (10, 26) Informationen über die Herkunft der jeweiligen Daten (12, 24) enthält.

15. System (8) nach einem der Ansprüche 11 bis 14,
wobei zumindest ein Constraint ein Richtline für die Datennutzung in zumindest einer vorgegebenen Situation beinhaltet.

16. System (8) nach einem der Ansprüche 11 bis 15, aufweisend einen nach einem kryptographischen Verfahren verschlüsselten Datenkanal und/oder einen sicheren Datenkanal zur Übertragung der ersten Daten (10).

17. System (8) nach einem der Ansprüche 11 bis 16,
wobei der Datenconsumer (6) einen Quantencomputer umfasst, welcher dazu konfiguriert ist, eine Quantenberechnung, insbesondere unter Verwendung eines oder mehrere Quantengatter, mit vom Datenprovider (4) bereitgestellten Quantendaten durchzuführen.

18. System (8) nach Anspruch 17,
wobei zumindest eine Datenschutzlizenz (10, 26) als Regel zur Kodierung und Übertragung der jeweiligen Daten (12, 24) in einen Quantenzustand ausgeführt ist.
